# EUROPEAN PATENT SPECIFICATION

(11) **EP 0 540 329 B1**
(45) Date of publication and mention of the grant of the patent: **16.07.1997**
(21) Application number: 92309915.4
(22) Date of filing: 29.10.1992
(51) Int. Cl.: G11B 20/10, G11B 27/30

(54) **Method for storing a multichannel audio signal on a compact disc**
Verfahren zum Aufzeichnen eines mehrkanaligen Audiosignals auf einer Compact Disc
Méthode d'enregistrement d'un signal audio à plusieurs canaux sur un disque compact

(30) Priority: 30.10.1991 FI 915113
(43) Date of publication of application: 05.05.1993
(73) Proprietor: NOKIA KULUTUSELEKTRONIIKKA OY, 20321 Turku (FI)
(72) Inventor: Kuusama, Juha, SF-33720 Tampere (FI)
(74) Representative: Singleton, Jeffrey

(56) References cited:
- EP-A- 0 372 601
- DE-A- 3 806 411
- DE-A- 4 033 993
- PATENT ABSTRACTS OF JAPAN vol. 15, no. 480 (P-1284)5 December 1991 & JP-A-03 205 659 (PIONEER ELECTRONICS CORP.) 9 September 1991
- PATENT ABSTRACTS OF JAPAN vol. 135, no. 000 (P-979)20 December 1989 & JP-A-01 241 062 (FUJITSU TEN LTD)
- PATENT ABSTRACTS OF JAPAN vol. 15, no. 78 (E-1037)22 February 1991 & JP-A-02 295 400 (NEC HOME ELECTRON LTD)
- PATENT ABSTRACTS OF JAPAN vol. 15, no. 480 (P-1284)5 December 1991 & JP-A-03 205 659
- PATENT ABSTRACTS OF JAPAN vol. 135, no. 000 (P-979)20 December 1989 & JP-A-01 241 062
- PATENT ABSTRACTS OF JAPAN vol. 15, no. 78 (E-1037)22 February 1991 & JP-A-02 295 400

## Description

The invention relates to a method by which it is also possible to record a multichannel sound on a CD (Compact Disc) on which a two-channel stereo sound and the control data required by the coder of the reproducing equipment are recorded in a known manner. The invention also relates to a disc on which a multichannel sound has been recorded in accordance with the invention.

Multichannel sound has currently become common as the sound in motion pictures, because it provides a listening enjoyment greater than does the two-channel stereo sound. However, the completed sound recordings on CDs currently available for consumers to purchase are conventional stereophonic recordings. It is to be expected that the requirement for multichannel sound reproduction from CDs will become more common in the future. In that case, of course, the first problem to be solved is how a multichannel sound can be recorded on a CD. The recording should be such that it could also be listened to as a conventional stereo signal by using present-day reproducing equipment. Questions pertaining to the transmission and reception of multichannel sound have also been discussed in the area of television systems. For example, the bandwidth of the audio channel in a digital NICAM system does not as such suffice for the transmission of a multichannel sound signal, and so a multichannel, e.g. four-channel, sound must be coded in some manner so that it will be suitable for transmission on the transmission path of a two-channel stereo signal. Furthermore, the coding must be done so that the received multichannel sound signal can as such be listened to as a two-channel stereo signal by using present-day receivers. The problem concerning television systems has been solved in Finnish patent application EP-A-0 540 330 filed simultaneously with the present application, the applicant being Salon Televisiotehdas Oy. Therein, a method is described by which a multichannel sound can be coded to render it suitable for transmission on a channel intended for the transmission of a two-channel sound. The coding method presented in conference publication Proc. ICASSP 90, Alberquerque, New Mexico, April 3-6, 1990, pp. 1097-1100, W.R.Th. ten Kate, L.M. van de Kerkhof and F.F.M. Zijderveld: Digital Audio Carrying Extra Information is used in the said application. The coding method has been developed by Philips.

The coding method utilizes a factor characteristic of human hearing, i.e. the masking effect. The masking effect means that to any audio signal it is possible to add another, weaker signal which is not at all audible to the ear owing to the masking effect. The masking effect is a psychoacoustic effect in which the auditory threshold shifts upwards when there are sounds lower than others present. The masking effect works best with sounds the spectral components of which are close to the components of the masking sound. Frequency masking weakens faster when a shift is made to lower sounds. This also applies on the time scale: the masking effect is greatest with sounds which are simultaneous. The existence of the masking effect can be exploited by adding to an audio signal signals which are below the auditory threshold. In principle this is done by sampling the audio signal and by substituting other information for those bits which are not audible to the human ear. The information is thus substituted for the less significant bits of the digital-form sample. When such a signal is reproduced, the human ear will not at all hear the added signal, for the actual signal intended for hearing will mask it. The masking capacity of the human ear thus determines how many less significant bits can be substituted without the substitution being yet audible.

In the above-mentioned patent application EP-A- 0 540 330, the information produced by the coder of the prior known Philips system is exploited. Such information includes information regarding the data mode, information relating to quantization, and information relating to dematrization. According to the invention disclosed in the said application, this information is transmitted to the receiver on a separate side channel, simultaneously with the audio signals; controlled by the side-channel information the receiver will be capable of processing the stereo signal it receives and of converting the signal, for example, into a four-channel stereo signal. Briefly, part of the information of the multichannel sound is hidden in the sound of the left and right stereo channels by taking advantage of the masking effect of the human ear. The rest of the multichannel sound is transmitted on the separate side channel on which the information for decoding is transmitted. The decoder of the receiver thus functions under the control of the coder of the transmitter, as a slave decoder, and decodes the sound back into a multichannel sound. Without multichannel sound decoding it is, however, possible to receive the sound transmitted on the stereo channel and, owing to the masking effect, to reproduce it as a normal stereo sound without the listener hearing the hidden sound. The coder described in the EP application, which may for its essential parts be similar to the Philips coder described in the said conference publication Proc. ICASSP 90, combines the incoming multichannel audio signal to form a combined stereo signal and, by making use of the masking effect, hides a data signal in the formed two-channel stereo signal. Information regarding the data mode, quantization and matrization is obtained from the coder. The quantization information indicates the quantization steps and number of bits of the masking signal and of the signal to be masked (hidden), as well as the masking threshold which has been calculated for the audio signal by time intervals. The matrization information indicates how the original multichannel audio signal was downmixed. Briefly, all the information by means of which the decoding can be carried out can be obtained from the coder. The combined stereo signal obtained from the coder, in which data have been "hidden", is adapted to the audio channel used, for example the NICAM format, for transmission on the radio path. The above-listed information, necessary for decoding, is transmitted simultaneously on a separate low-speed digital channel. If the data to be hidden in the audio channel do not at a given point of time fit in the audio channel - the masking capacity of the audio signal is not sufficient - these data can be transmitted on the said separate data channel; the information transmitted on this channel can be called side information since it is transmitted on the side of the actual audio channel.

In the receiver the decoder receives the signal of the audio channel and the side information of the data channel, and controlled by the decoding information transmitted in the latter, it will be able to decode the signal of the audio channel and to extract the data hidden in it. Controlled by the matrization information it will further be able to form, for example, a multichannel audio signal. The data channel used for the transmission of the side information may be slow, and the data transmitted on it can be easily compressed and protected. The method is especially suitable for being used for transmitting a multichannel sound (surround sound) in a high-definition television system.

It was mentioned at the beginning of this specification that the CDs currently on sale have two-channel stereo sound. The problem how a multichannel sound can be recorded on a CD can be solved by using the principle of the said EP application. Thus, when reproduced by present-day equipment, the recording will sound quite like a conventional two-channel stereo sound, but when the reproducing equipment is provided with a special decoder, the recording can be reproduced as the original multichannel sound, so-called surround sound.

Patent number DE 4 033 993 discloses a digital information signal recording medium and its player. Sound field control information is included in a subcode signal on a recording medium. The subcode is decoded to control the sound field.

European patent application number 0 372 601 discloses a coder for incorporating extra information in a digital audio signal. The coder incorporates extra information in the form of an auxiliary signal in a digital audio signal. It determines the amount of extra information that can be added without the extra information being audible with unmodified detection.

This recording is made according to the method of Claim 1 resulting in a Compact Disc as defined in claim 5.

The invention is based on the realization that since, as is known, also data information necessary for decoding is always recorded on a CD in addition to the stereo sound, the data required by the reproduction of a multichannel signal can be included among this data information. This is possible, since the space reserved on a CD for data information already has reservation for the recording of extra data by providing redundant data capacity for this purpose. More precisely, this means that the side-channel information defined in patent application EP-A-0 540 330 is recorded in the redundant data capacity in the data blocks of the CD, and sound of the other channels is hidden on the two audio channels of the disc by exploiting the masking effect. When the sound is being reproduced as a multichannel sound, the recording is dematrized by making use of the side-channel information and the sound information hidden in the two audio channels. The side-channel information cannot be used with conventional CD decoders, and so the reproduced sound will be a two-channel stereo sound which, owing to the masking effect, will sound like the original one in spite of the sound hidden in it. On the other hand, when a coder controlled by the side-channel information is used, a multichannel sound will be obtained.

The invention is described with reference to the accompanying figures, in which
Figure 1 depicts the structure of one data frame of a CD,
Figure 2 depicts the general principle of coding a multichannel sound and of hiding it in the stereo channel, and
Figure 3 depicts the decoding of a multichannel sound recorded on a CD.

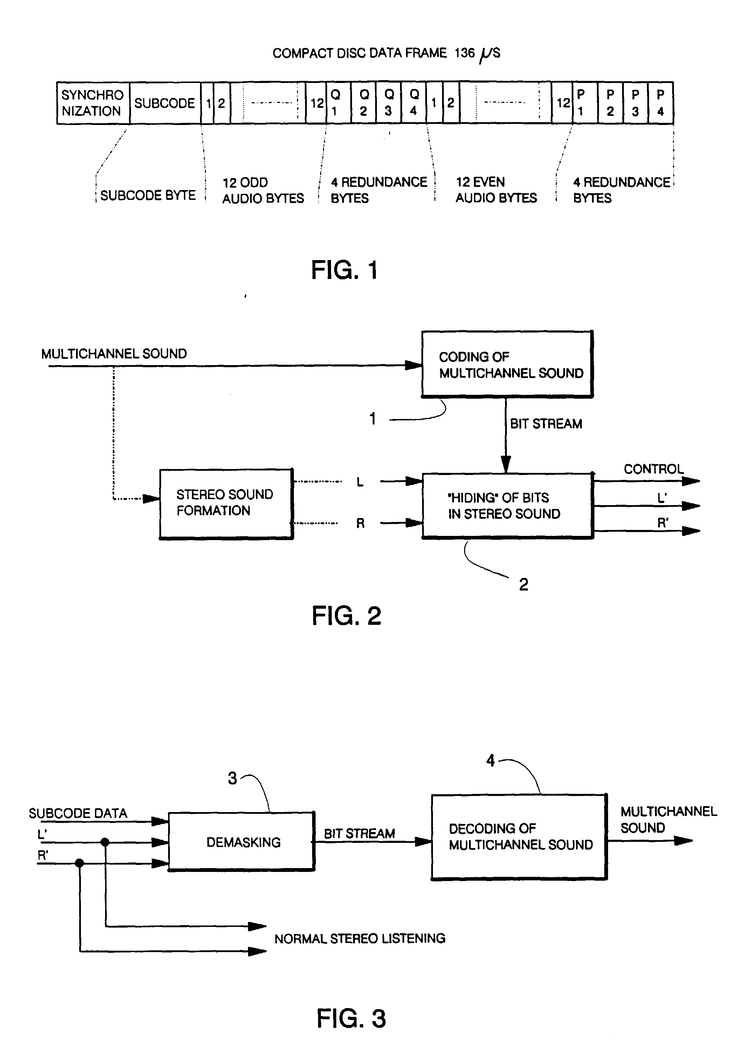

The information on a CD is made up of successive data frames such as shown in Figure 1. Each frame includes 33 symbols (bytes), which are preceded by a preamble, and one symbol comprises 8 data bits. The first symbol of the frame is used for the subcode, and 24 of the remaining 32 bytes represent audio samples and eight bytes are used for error correction purposes to correct burst errors and random errors. The subcode as a whole is rather extensive, and only part of it is contained in one frame. The entire subcode is placed in 98 successive frames. Relative to the audio signal the subcode is essentially an auxiliary data stream which has been placed among the audio samples. Its function is, among other things, to assist in finding the starting points of the different musical pieces on the disc, in locating them on the disc, in cataloging the durations of the pieces, and in the cumulative time counting of the disc. Furthermore, it conveys information on the pre-emphasis used in the recording so that the disc player can automatically select the correct method of de-emphasis. The format of the subcode is standardized. The reproducing equipment will find it on the disc so that each frame begins with a synchronization pattern. The disc player recognizes the pattern and uses it for incrementing the frame counter. The different subcodes are distinguished so that there is a synchronization pattern also in the subcode area, in which case two successive synchronization patterns separate the different subcode blocks from each other. Since the subcodes can be thus recognized, they can be extracted from the frames so that the audio samples are directed to their own audio sample processing branch. It was stated above that the subcode is placed in 98 frames. The disc player extracts the subcodes and stores them in the RAM memory. When 96 eight-bit subcodes have been extracted, the processor of the player will take this as eight 96-bit code words. Thus each block of 98 frames has 8 such code words, but at present only one of these 96-bit words has significance, i.e. it is in use, and the rest of the seven code words which fit in the storing capacity of the block are reserved for future use. Thus the free capacity for storing the side information according to the invention amounts to seven 96-bit words every 13.3rd millisecond, i.e. 50526 bits/second. This capacity is usable for storing the side-channel information.

According to the invention, in the frames other than the bytes of the audio samples there is placed side-channel information which, in addition to any audio samples, contains all the information required for controlling the decoder of the reproducing equipment. These bytes, in which the side-channel information is recorded, constitute, in accordance with what is stated above, the free capacity of the subcode, i.e. 7 words of 96 bits per each block of 98 frames. The recording speed is, if the entire free capacity were used, 50.526 kbit/s. Any other multichannel information is hidden in the audio samples themselves.

When multichannel material is being recorded on a CD, the procedure is in accordance with Figure 2, as follows: The multichannel sound is converted in one way or another into a bit stream by means of the multichannel sound coder. The coder may function according to any prior known method, for example NICAM, MUSICAM, PCM. Let us assume, for example, as follows:
The original music recording is in existence in two forms, i.e. as a stereo sound L, R and as a multichannel sound A1, A2, A3...An. The producer of the performance has, of course, in some manner made the stereo sound from the multichannel sound. The multichannel sounds A1...An are thus coded as a bit stream in accordance with Figure 2, in the multichannel sound coder 1. The data of this bit stream are hidden in the stereo sound in a known manner in block 2. A new stereo pair L', R' is obtained. In the manner described in application FI-915114, also a side channel is formed the information of which contains the necessary data relating to the decoding of the multichannel sound, i.e. the decoder control data. That portion of the decoder bit stream which cannot be hidden in the stereo pair L, R is also transmitted on the side channel.

When a multichannel sound is being recorded on a CD, each channel L' and R' containing hidden information is recorded on its own audio channel. The control channel information is recorded in the place of the free subcode words of the user data on the disc. In recording on the disc, already existing equipment can thus mostly be used.

When the CD is being played on a player, the procedure is in accordance with Figure 3. As at present, the subcode data and the audio-channel data are read from the disc. If present-day players are used for reproducing the sound, stereo channels L' and R' are obtained for reproduction. Owing to the masking effect they will sound to the listener quite the same as the original stereo channels L and R. When the player is equipped with an auxiliary device for decoding the multichannel sound, the audio signals L' and R' and the side-channel information read from the subcode data are led to the demasking block 3, where the information hidden in the audio signals L', R' is extracted from them. The data extraction is carried out under the control of the side-channel information read from the subcode data. Thus a bit stream is obtained which is the same as the bit stream coming from the coder of Figure 2. This bit stream is applied to the multichannel sound decoder 4 which, according to the control data contained in the bit stream, will decode the original multichannel audio signal. The decoder is thus, for example, a NICAM, MUSICAM or PCM decoder, depending on the coder used.

If the multichannel sound data hidden in the signal of the right channel R and the left channel L are not removed, the signal is not quite the same as in the original, but owing to the masking effect, the listener will not notice any difference. Since the format of a multichannel sound may be made identical to the format of the audio signal to be recorded on the CD and, by a suitable arrangement, identical to the format of the data to be recorded on the CD, a CD recording made by the method of the invention can be used for reproducing a two-channel audio signal with conventional players or for reproducing a multichannel stereo signal (surround sound) when using in the player a decoder equipped with suitable additional circuits.

The CD according to the invention has many advantages. It is completely compatible with existing CD equipment. The disc can be manufactured and it can be played using current equipment, without any additional auxiliary devices. If the coding/decoding method utilizing the side channel presented by the applicant is used in a HDTV television system, the CD recording will be compatible with the HDTV audio material at the bit level.

## Claims

1. A method for storing a multichannel (A1, A2...An) audio signal on a compact disc, wherein the information in digital form is made up of the audio samples of the left channel and the right channel and of the user data which the reproducing equipment will need for arranging the audio samples into a stereo signal, and in which method the multichannel audio signal (A1, A2...An) is coded so that a bit stream is obtained, a first audio signal (L) and a second audio signal (R) are formed from the multichannel audio signal, there being calculated for each of them a masking threshold below which sounds are not audible to the human ear, and the bits of the said bit stream are substituted for those bits in the first and second audio signals which remain below the masking threshold, whereby a converted first audio signal (L') and a converted second audio signal (R') are obtained,
**characterized** in that
- all the control data required for extracting the bits of the said bit stream from the first and second audio signals are collected,
- the converted first audio signal (L') and the converted second audio signal (R') are stored as the audio samples of the left channel and the right channel of the CD,
- the collected control data are stored as part of the user data of the CD, in its subcode words.

2. A method according to Claim 1, **characterized** in that also that part of the bit stream which cannot be combined with the first and the second audio signals is combined with the control data.

3. A method according to Claim 2, **characterized** in that the format of the multichannel audio signal is 3/2, which means that it has a left channel (L), a right channel (R) and a center channel (C), as well as two surround channels (SR, SL) on the sides.

4. A method according to Claims 1 and 3, **characterized** in that the first audio signal contains the left channel (L) information and the second audio signal contains the right channel (R) information.

5. A compact disc the digital-form information on which is made up of audio samples of the left channel and the right channel and of user data required by the reproducing equipment for arranging the audio samples into an audio signal, **characterized** in that
- the audio samples of the first channel (L') are made up of the first-channel (L) samples of a stereo sound formed from a multichannel audio signal (A1, A2...An), in which samples those bits which are below the masking threshold have been substituted by bits of a multichannel audio signal coded into a bit stream
- the audio samples of the second channel (R') are made up of the second-channel (R) samples of a stereo sound formed from a multichannel audio signal (A1, A2...An), in which samples those bits which are below the masking threshold have been substituted by bits of the multichannel audio signal coded into a bit stream,
- all the control data required for extracting the bits of the bit stream from the audio samples of the first and the second channels (L' and R') and for reconstructing the original multichannel audio signal are incorporated into the user data subcoding.

6. A compact disc according to Claim 5, **characterized** in that the user data subcoding also includes that portion of the bit stream which it has not been possible to place below the masking threshold of the audio samples of the first channel (L) and the second channel (R).

## Patentansprüche

1. Verfahren zum Speichern eines mehrkanaligen (A1, A2 ... An) Audiosignals auf einer CD, wobei die Information in digitaler Form aus Schallabtastungen des linken Kanals und des rechten Kanals sowie aus Benützerdaten, die die Wiedergabeeinrichtung benötigt, um Schallabtastungen zu einem Stereosignal zu arrangieren, besteht, wobei das mehrkanalige Schallsignal (A1, A2 ... An) so kodiert ist, daß man eine Bitfolge erhält, aus dem mehrkanaligen Audiosignal ein erstes Audiosignal (L) und ein zweites Audiosignal (R) gebildet werden, wobei für jeden ein Maskierungsschwellenwert berechnet wird, unterhalb dessen Schalle für das menschliche Ohr nicht hörbar sind, wobei die Bits der Bitfolge anstelle derjenigen Bits des ersten und zweiten Audiosignals gesetzt werden, die unterhalb des Maskierungsschwellenwerts bleiben, wodurch man ein umgewandeltes erstes Audiosignal (L') und ein umgewandeltes zweites Audiosignal (R') erhält,
dadurch gekennzeichnet, daß
- alle zum Herausziehen der Bits der Bitfolge aus dem ersten und dem zweiten Audiosignal benötigten Steuerungsdaten gesammelt werden,
- das umgewandelte erste Audiosignal (L') und das umgewandelte zweite Audiosignal (R') als Schallabtastungen des linken Kanals und des rechten Kanals der CD gespeichert werden,
- die gesammelten Steuerungsdaten als Teil der Benützerdaten der CD in ihren Untercodeworten gespeichert werden.

2. Verfahren nach Anspruch 1, dadurch gekennzeichnet, daß auch ein Teil der Bitfolge, der nicht mit dem ersten und dem zweiten Audiosignal kombiniert werden kann, mit den Steuerungsdaten kombiniert wird.

3. Verfahren nach Anspruch 2, dadurch gekennzeichnet, daß das Format des mehrkanaligen Audiosignals 3/2 ist, was bedeutet, daß es einen linken Kanal (L) hat, einen rechten Kanal (R) und einen Mittenkanal (C), außerdem zwei Umgebungskanäle (SR, SL) auf den Seiten.

4. Verfahren nach den Ansprüchen 1 oder 3, dadurch gekennzeichnet, daß das erste Audiosignal die Information des linken Kanals (L) enthält und das zweite Audiosignal die Information des rechten Kanals (R).

5. Kompaktdisk, deren digital vorliegende Information aus Schallabtastungen des linken Kanals und des rechten Kanals sowie aus Benützerdaten besteht, die die Wiedergabeeinrichtung zum Anordnen der Schallabtastungen zu einem Audiosignal benötigt,
dadurch gekennzeichnet, daß
- die Schallabtastungen des ersten Kanals (L') aus Abtastungen des ersten Kanals (L) eines Stereoschalls bestehen, der aus einem mehrkanaligen Audiosignal (A1, A2 ... An) gebildet wird, wobei bei den Abtastwerten diejenigen Bits, die unter dem Maskierungsschwellenwert liegen, durch Bits eines mehrkanaligen Audiosignals ersetzt wurden, das in eine Bitfolge kodiert wurde,
- die Schallabtastungen des zweiten Kanals (R') aus Abtastungen des zweiten Kanals (R) eines Stereoschalls bestehen, der aus einem mehrkanaligen Audiosignal (A1, A2 ... An) gebildet wird, wobei bei den Abtastwerten diejenigen Bits, die unter dem Maskierungsschwellenwert liegen, durch Bits des mehrkanaligen Audiosignals ersetzt wurden, das in eine Bitfolge kodiert wurde,
- alle die zum Entnehmen der Bits der Bitfolge aus den Schallabtastungen des ersten und des zweiten Kanals (L' und (R') und zum Rekonstruieren des ursprünglichen mehrkanaligen Audiosignals notwendigen Steuerungsdaten in der Unterkodierung der Benützerdaten enthalten sind.

6. Kompaktdisk nach Anspruch 5, dadurch gekennzeichnet, daß die Benützerdatenunterkodierung auch denjenigen Teil der Bitfolge enthält, der nicht unter den Maskierungsschwellenwert der Schallabtastungen des ersten Kanals (L) und des zweiten Kanals (R) gesetzt werden konnte.

## Revendications

1. Procédé pour enregistrer un signal à plusieurs canaux (A₁, A₂,...Aₙ) sur un disque compact, dans lequel l'information sous forme digitale est constituée des échantillons audio du canal de gauche et du canal de droite et des données de l'utilisateur, dont l'équipement de reproduction aura besoin pour convertir les échantillons audio en un signal stéréo, et procédé dans lequel on code le signal audio à plusieurs canaux (A₁, A₂, ...Aₙ) de telle sorte que l'on obtient un courant de bit, qu'un premier signal audio (L) et un second signal audio (R) sont formés à partir du signal audio à plusieurs canaux, un seuil de masquage étant calculé pour chacun d'eux à ce niveau en dessous duquel les sons ne sont pas audibles par l'oreille humaine, et les bits dudit courant de bit sont substitués pour ces bits dans le premier et second signal audio qui restent en dessous du seuil de masquage, par lesquels on obtient un premier signal audio converti (L') et un second signal audio converti (R'),
caractérisé en ce que
- toutes les données de contrôle nécessaires pour extraire les bits dudit courant de bit à partir du premier et second signal audio sont collectées,
- le premier signal audio converti (L') et le second signal audio converti (R') sont stockés comme échantillons audio du canal gauche et du canal droit du CD,
- les données de contrôle collectées sont stockées comme partie des données de l'utilisateur du CD dans leurs mots de sous-code.

2. Procédé selon la revendication 1, caractérisé en ce que cette partie de courant de bit qui ne peut pas être combinée avec le premier et second signal audio est aussi combinée avec les données de contrôle.

3. Procédé selon la revendication 2, caractérisé en ce que le format du signal audio à plusieurs canaux est de 3/2 ce qui signifie qu'il a un canal gauche (L) et un canal droit (R) et un canal central (C), de la même manière que les 2 canaux en relief (SR, SL) sur les côtés.

4. Procédé selon les revendications 1 et 3, caractérisé en ce que le premier signal audio contient l'information du canal gauche (L) et le second signal audio contient l'information du canal droit (R).

5. Un disque compact sur lequel l'information sous forme digitale est constituée des échantillons audio du canal gauche et du canal droit et des données de l'utilisateur nécessaires à l'équipement de reproduction pour convertir les échantillons audio en un signal audio, caractérisé en ce que
- les échantillons audio du premier canal (L') sont constitués des échantillons du premier canal (L) d'un son stéréo formé à partir d'un signal audio à plusieurs canaux (A₁, A₂,...Aₙ), dans lequel les échantillons, ces bits qui sont en dessous du seuil de masquage, ont été substitués par les bits d'un signal audio à plusieurs canaux codés en un courant de bit,
- les échantillons audio du second canal (R') sont constitués des échantillons du second canal (R) d'un son stéréo formé à partir d'un signal audio à plusieurs canaux (A₁, A₂,...Aₙ), dans lequel les échantillons, ces bits qui sont en dessous du seuil de masquage, ont été substitués par les bits d'un signal audio à plusieurs canaux codés en courant de bit,
- toutes les données de contrôle nécessaires pour extraire les bits du courant de bit à partir des échantillons audio du premier et second canal (L' et R') et pour reconstruire le signal audio à plusieurs canaux d'origine, sont incorporées dans le sous-codage des données de l'utilisateur.

6. Un disque compact selon la revendication 5, caractérisé en ce que le sous-codage des données de l'utilisateur inclue aussi cette portion de courant de données qu'il n'a pas été possible de placer en dessous du seuil de masquage des échantillons audio du premier canal (L) et du second canal (R).
